# EUROPÄISCHE PATENTSCHRIFT

(11) **EP 4 365 477 B1**
(45) Veröffentlichungstag und Bekanntmachung des Hinweises auf die Patenterteilung: **02.04.2025**
(21) Anmeldenummer: 23184631.2
(22) Anmeldetag: 11.07.2023
(51) Int. Cl.: F16P 3/12

(54) **ÜBERWACHUNGSEINRICHTUNG**
MONITORING DEVICE
DISPOSITIF DE SURVEILLANCE

(30) Priorität: 02.11.2022 DE 202022106140 U
(43) Veröffentlichungstag der Anmeldung: 08.05.2024
(73) Patentinhaber: Leuze electronic GmbH + Co. KG, 73277 Owen/Teck (DE)
(72) Erfinder: Eder, Alexander, 86928 Hofstetten (DE); Storr, Mathias, 72622 Nürtingen (DE); Soukup, David, 32600 Pilsen (CZ); Bristle, Matthias, 73249 Wernau (DE)
(74) Vertreter: Ruckh, Rainer Gerhard

(56) Entgegenhaltungen:
- EP-A1- 3 859 382

## Beschreibung

Die Erfindung betrifft eine Überwachungseinrichtung zur Absicherung eines Gefahrenbereichs.

Der Gefahrenbereich befindet sich typischerweise im Umfeld einer Anlage von der Gefahren für Personen ausgehen können. Der Zugang zu dem Gefahrenbereich kann beispielsweise über ein Förderband erfolgen. Dann ist am Förderband ein Sicherheitssensor wie z.B. ein Lichtvorhang vorgesehen. Mit dem Sicherheitssensor wird ein Schutzfeld überwacht, das sich über die gesamte Breite des Förderbands erstreckt.

Mit dem Sicherheitssensor erfolgt eine Objektdetektion innerhalb dieses Schutzfelds. In einem Sicherheitsbetrieb des Sicherheitssensors löst dieser eine Sicherheitsfunktion aus, wenn im Schutzfeld ein Objekt detektiert wird. Mit der Sicherheitsfunktion wird die Anlage in einen sicheren Zustand überführt, insbesondere abgeschaltet, so dass Gefahren für Personen vermieden werden.

Auf dem Förderband werden auch zulässige Objekte wie z.B. Paletten transportiert. Dort können Arbeitsmaterialien vorhanden sein, die an der Anlage zur Durchführung von Arbeitsprozessen benötigt werden. Da diese zulässigen Objekte im Gegensatz zu Personen keine sicherheitskritischen Objekte darstellen sollen diese auf dem Förderband zur Anlage transportiert werden können, ohne dass der Sicherheitssensor bei Detektion der Paletten die Sicherheitsfunktion auslöst und die Anlage stillsetzt, da dies die Verfügbarkeit der Anlage unnötig einschränken würde.

Um das zu erreichen, ist die Überwachungsrichtung mit einer Mutingfunktion ausgestattet. Hierzu sind Mutingsensoren in Form von Lichtschranken in Förderrichtung des zulässigen Objektes vor dem Sicherheitssensor am Förderband angeordnet.

Wird ein zulässiges Objekt wie eine Palette auf dem Förderband gefördert, werden die Strahlengänge der Lichtschranken in einer bestimmten zeitlichen Reichenfolge unterbrochen, wodurch das zulässige Objekt erkannt und von sicherheitskritischen Objekten wie Personen unterschieden wird.

Sobald ein zulässiges Objekt erkannt wurde, wird eine Mutingfunktion derart aktiviert, dass der Sicherheitssensor stummgeschaltet, d.h. gemutet wird, so dass dieser bei einem Objekteingriff keine Sicherheitsfunktion auslöst. Das zulässige Objekt kann daher das Schutzfeld des Sicherheitssensors ungehindert passieren.

Ein Nachteil bei derartigen Überwachungseinrichtungen besteht darin, dass mit den Mutingsensoren zulässige Objekte von sicherheitskritischen Objekten nicht hinreichend sicher unterschieden werden können. Dadurch kann auch die Generierung der Mutingfunktion fehlerhaft sein, was zu unkontrollierten Gefahrenzuständen an der Anlage führen kann.

Die EP 3 859 382 A1 betrifft ein Verfahren zur Lokalisierung einer Person oder eines Objektes in einem Überwachungsbereich mit einem Sicherheitssystem und Sicherheitssystem, mit mindestens einer bewegbaren Maschine, mit einer Steuer- und Auswerteeinheit, mit mindestens einem Funkortungssystem, mit mindestens einem ortsauflösenden Sensor zur Positionsbestimmung der Person oder des Objektes, wobei das Funkortungssystem angeordnete Funkstationen aufweist. An der Person oder dem Objekt ist mindestens ein Funktransponder angeordnet, wobei mittels dem Funkortungssystem Positionsdaten der Person oder des Objektes ermittelt werden. Die Positionsdaten werden von den Funkstationen des Funkortungssystems an die Steuer- und Auswerteeinheit übermittelt. Mittels dem ortsauflösenden Sensor werden Positionsdaten der Person oder des Objekts ermittelt, wobei die Steuer- und Auswerteeinheit die Positionsdaten des Funkortungssystems und die Positionsdaten des Sensors vergleicht und bei einer Übereinstimmung geprüfte Positionsdaten bildet.

Der Erfindung liegt die Aufgabe zugrunde eine Überwachungseinrichtung bereitzustellen mittels derer eine sichere Gefahrenbereich-Überwachung an einer Anlage gewährleistet ist, ohne die Verfügbarkeit der Anlage unnötig einzuschränken.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung zur Absicherung des Zugangs zu einem Gefahrenbereich mit einem Sicherheitssensor, welcher in einem Sicherheitsbetrieb ein Schutzfeld überwacht. Der Sicherheitssensor löst bei einem Objekteingriff in das Schutzfeld eine Sicherheitsfunktion aus. Die Überwachungseinrichtung umfasst weiter eine Sensoranordnung, die zur Erfassung eines zulässigen Objekts ausgebildet ist und eine diversitär redundante Anordnung von Sensoren aufweist. Bei Erfassung eines zulässigen Objektes wird mittels der Sensoranordnung der Sicherheitssensor in einen reduzierten Sicherheitsbetrieb versetzt, in welchem das zulässige Objekt den Zugang zum Gefahrenbereich passieren kann, ohne dass der Sicherheitssensor die Sicherheitsfunktion auslöst. Im reduzierten Sicherheitsbetrieb wird für den Sicherheitssensor anstelle des Schutzfelds ein Sicherheitsschutzfeld aktiviert, welches kleiner als das Schutzfeld ist und einen Zugang zum Gefahrenbereich außerhalb dieses Sicherheitsschutzfelds ermöglicht. Die Sensoranordnung weist Mittel zur Bestimmung von Gewichts- und/oder Masseninformationen und wenigstens einen Radarsensor (8) oder wenigstens einen Ultraschallsensor (9) auf. Alternativ weist die Sensoranordnung wenigstens einen kamerabasierten Sensor und wenigstens einen Radarsensor (8) oder wenigstens einen Ultraschallsensor (9) auf.

Die erfindungsgemäße Überwachungseinrichtung dient zur Absicherung eines Gefahrenbereichs an einer Anlage von der Gefahren für Personen ausgehen können. Der Zugang zum Gefahrenbereich wird mit einem Sicherheitssensor abgesichert. In einem Sicherheitsbetrieb wird mit dem Sicherheitssensor ein Schutzfeld überwacht, welches sich über den gesamten Zugang zum Gefahrenbereich erstreckt.

Wird im Sicherheitsbetrieb mit dem Sicherheitssensor ein Objekt im Schutzfeld erkannt, löst der Sicherheitssensor eine Sicherheitsfunktion aus, die die Anlage in einen sicheren Zustand versetzt. Insbesondere wird die Anlage durch die Sicherheitsfunktion stillgesetzt.

Erfindungsgemäß weist die Überwachungseinrichtung eine Sensoranordnung mit einer diversitär redundanten Anordnung von Sensoren auf, welche zur Erfassung von zulässigen Objekten, d.h. nicht gefährdeten oder speziell für diesen Zweck befähigten Objekten, dient.

Durch die diversitär redundante Ausbildung der Sensoren der Sensoranordnung können zulässige Objekte sehr zuverlässig und sicher erkannt und von gefährdeten Objekten, insbesondere Personen, sicher unterschieden werden.

Eine zuverlässige Identifikation von zulässigen Objekten wird insbesondere dadurch gewährleistet, dass mit der Sensoranordnung die Größe und/oder Kontur und/oder Geschwindigkeit und/oder spezifische Objekteigenschaften wie z.B. Material oder Gewicht eines zulässigen Objekts erfasst werden.

Damit können auch unterschiedlich ausgebildete zulässige Objekte zuverlässig erkannt werden. Beispielsweise kann das zulässige Objekt ein Stapler ist.

Erfindungsgemäß wird dann, wenn mit der Sensoranordnung ein zulässiges Objekt erkannt wurde, der Sicherheitssensor in einen reduzierten Sicherheitsbetrieb versetzt. In dem reduzierten Sicherheitsbetrieb kann ein zulässiges Objekt, das zuvor mit der Sensoranordnung erfasst wurde, den Zugang zum Gefahrenbereich passieren, ohne dass der Sicherheitssensor eine Sicherheitsfunktion auslöst. Da mit der Sensoranordnung das zulässige Objekt erkannt und identifiziert wurde, ist sichergestellt, dass das den Zugang zum Gefahrenbereich passierende Objekt nicht zu einer unkontrollierten Gefahrensituation führt. Durch die Umschaltung des Sicherheitssensors in den reduzierten Sicherheitsbetrieb wird damit das Sicherheitsniveau bei der Gefahrenbereich-Absicherung nicht beeinträchtigt.

Zudem wird die Verfügbarkeit der Anlage erhöht, da ein unnötiges Stillsetzen der Anlage durch ein Passieren des Zugangs des Gefahrenbereichs durch das zulässige Objekt vermieden wird.

Erfindungsgemäß wird im reduzierten Sicherheitsbetrieb für den Sicherheitssensor ein Sicherheitsschutzfeld aktiviert, welches in der Fläche kleiner ist als das Schutzfeld im Sicherheitsbetrieb und einen Zugang zum Gefahrenbereich außerhalb dieses Sicherheitsschutzfelds ermöglicht.

Das aktivierte Sicherheitsschutzfeld ist dann so dimensioniert, dass mit diesem nicht mehr der gesamte Zugang vom Gefahrenbereich überwacht wird. Vielmehr verbleibt eine nicht überwachte Lücke des Zugangs, die an die Abmessung des zuvor detektierten zulässigen Objekts angepasst ist, so dass das zulässige Objekt durch diese Lücke den Zugang zum Gefahrenbereich passieren kann, ohne dass der Sicherheitssensor die Sicherheitsfunktion auslöst.

Der Vorteil besteht hierbei darin, dass mit dem Sicherheitsschutzfeld der Bereich des Zugangs, in welchem das zulässige Objekt nicht vorhanden ist, nach wie vor überwacht wird, so dass ein in das Sicherheitsschutzfeld eindringendes Objekt zur Auslösung der Sicherheitsfunktion führt. Dies führt bei erhöhter Verfügbarkeit der Anlage zu einer besonders sicheren Überwachungsfunktion da unzulässige Objekte, die neben dem zulässigen Objekt den Zugang zum Gefahrenbereich passieren möchten, sofort erkannt werden und zur Auslösung der Sicherheitsfunktion führen.

Vorteilhaft weist der Sicherheitssensor eine Auswerteeinheit auf, in welcher abhängig von Sensorsignalen ein Schaltsignal generiert wird. Bei einem Objekteingriff im Schutzfeld nimmt das Schaltsignal einen Schaltzustand ein, der zur Auslösung der Sicherheitsfunktion führt.

Für den Einsatz im Bereich der Sicherheitstechnik weist der Sicherheitssensor einen fehlersicheren Aufbau auf. Dies kann durch einen redundanten Aufbau der Auswerteeinheit, beispielsweise in Form zweier sich gegenseitig zyklisch überwachender Rechnereinheiten, erzielt werden.

Gemäß einer ersten Variante werden mit der Sensoranordnung generierte Sensorsignale in der Auswerteeinheit des Sicherheitssensors ausgewertet.

Abhängig hiervon übernimmt die Auswerteeinheit des Sicherheitssensors selbst die Umschaltung zwischen dem Sicherheitsbetrieb und dem reduzierten Sicherheitsbetrieb.

Gemäß einer zweiten Variante werden mit der Sensoranordnung generierte Sensorsignale in einer Steuereinheit ausgewertet, wobei die Steuereinheit abhängig von diesen Sensorsignalen ein Steuersignal für den Sicherheitssensor generiert. In diesem Fall übernimmt die Steuereinheit mittels des Steuersignals das Umschalten zwischen dem Sicherheitsbetrieb und dem reduzierten Sicherheitsbetrieb des Sicherheitssensors.

Der reduzierte Sicherheitsbetrieb, der es ermöglicht, dass ein zulässiges Objekt den Zugang zum Gefahrenbereich ohne Auslösen der Sicherheitsfunktion durch den Sicherheitssensor passieren kann, wird vorteilhaft nur so lange aufrechterhalten, bis das zulässige Objekt den Zugang zum Gefahrenbereich passiert hat. Danach wechselt der Sicherheitssensor wieder in den Sicherheitsbetrieb und löst die Sicherheitsfunktion aus, wenn ein Objekt im Schutzfeld erfasst wird.

Dies wird vorteilhaft dadurch bewerkstelligt, dass ein Umschalten des reduzierten Sicherheitsbetrieb in den Sicherheitsbetrieb des Sicherheitssensors dann erfolgt, wenn mit dem Sicherheitssensor kein Objekt innerhalb des Schutzfelds oder des Sicherheitsschutzfelds detektiert wird.

Alternativ weist die Sensoranordnung wenigstens einen Passivinfrarot-Bewegungsmelder

Weiterhin ist es möglich, dass ein Umschalten des reduzierten Sicherheitsbetriebs in den Sicherheitsbetrieb des Sicherheitssensors nach einer vorgegebenen Zeitdauer erfolgt.

Die erfindungsgemäße Sensoranordnung umfasst Mittel zur Bestimmung von Gewichts- und/oder Masseninformationen und wenigstens einen Radarsensor oder wenigstens einen Ultraschallsensor. Alternativ weist die Sensoranordnung wenigstens einen kamerabasierten Sensor und wenigstens einen Radarsensor oder wenigstens einen Ultraschallsensor auf.

Alternativ weist die Sensoranordnung wenigstens einen kamerabasierten Sensor und wenigstens einen Radarsensor oder wenigstens einen Ultraschallsensor auf.

Die Sensoren der Sensoranordnung können generell einen einkanaligen, nicht fehlersicheren Aufbau aufweisen, da durch die diversitäre Redundanz der Sensoren das erforderliche Sicherheitsniveau bei der Erfassung zulässiger Objekte erzielt wird.

Generell kann die Sensoranordnung von jeder Sensorart nur einen Sensor aufweisen, wenn damit ein hinreichend großer Raumbereich überwacht werden kann. Dies kann beispielweise auch dadurch realisiert sein, dass scannende Sensoren die Sensoranordnung bilden. Alternativ kann die Sensoranordnung auch von jeder Sensorsorte mehrere Sensoren aufweisen. Vorteilhaft ist der Sicherheitssensor ein optischer Sensor.

Der optische Sensor kann ein Lichtvorhang sein, der eine Sendereinheit mit Lichtstrahlen emittierenden Sendern an einem Rand eines Überwachungsbereichs und eine Empfängereinheit mit einer Anordnung von Lichtstrahlen empfangenden Empfängern am gegenüberliegenden Rand des Überwachungsbereichs aufweist. Bei freiem Überwachungsbereich treffen die Lichtstrahlen jedes Senders auf einen zugeordneten Empfänger Bei einem Objekteingriff im Überwachungsbereich wird der Strahlengang wenigstens einer der Lichtstrahlen unterbrochen. Der Lichtvorhang kann auch als Reflex-Lichtvorhang ausgebildet sein. Dann sind alle Sender und Empfänger in einem Gehäuse an einem Rand des Überwachungsbereichs angeordnet. Am gegenüberliegenden Rand des Überwachungsbereichs ist ein Reflektor angeordnet. Bei freiem Überwachungsbereich werden die Lichtstrahlen jedes Senders auf den Reflektor geführt und von dort zurück zu dem jeweils zugeordneten Empfänger geführt.

Der optische Sensor kann auch als Flächendistanzsensor, d.h. als scannender Distanzsensor ausgebildet sein. Vorteilhaft erfolgen die Distanzmessungen nach einem Impulslaufzeitverfahren. Der Distanzsensor kann in einem rotierenden Messkopf untergebracht sein. Durch die Drehbewegung des Messkopfs werden vom Distanzsensor emittierte Lichtstrahlen periodisch innerhalb eines flächigen Überwachungsbereichs geführt. Alternativ kann der Distanzsensor stationär in einem Gehäuse angeordnet sein. Dann werden die Lichtstrahlen des Distanzsensors mittels einer Ablenkeinheit periodisch innerhalb des Überwachungsbereichs geführt.

Schließlich kann der optische Sensor als Kamerasensor, insbesondere als distanzmessendes Kamerasystem, ausgebildet sein.

Die Erfindung wird im Folgenden anhand der Zeichnungen erläutert. Es zeigen:
- Figur 1:: Ausführungsbeispiel der erfindungsgemäßen Überwachungseinrichtung in einer Draufsicht von oben.
- Figur 2:: Perspektivische Darstellung einer Sensoranordnung der Überwachungseinrichtung gemäß Figur 1.
- Figur 3:: Einzeldarstellung eines Sicherheitssensors mit einem von diesem überwachten Schutzfeld.
- Figur 4:: Sicherheitssensor gemäß Figur 3 mit einem von diesem überwachten Sicherheitsschutzfeld.
- Figur 5:: Blockschaltbild der Überwachungseinrichtung gemäß Figur 1.

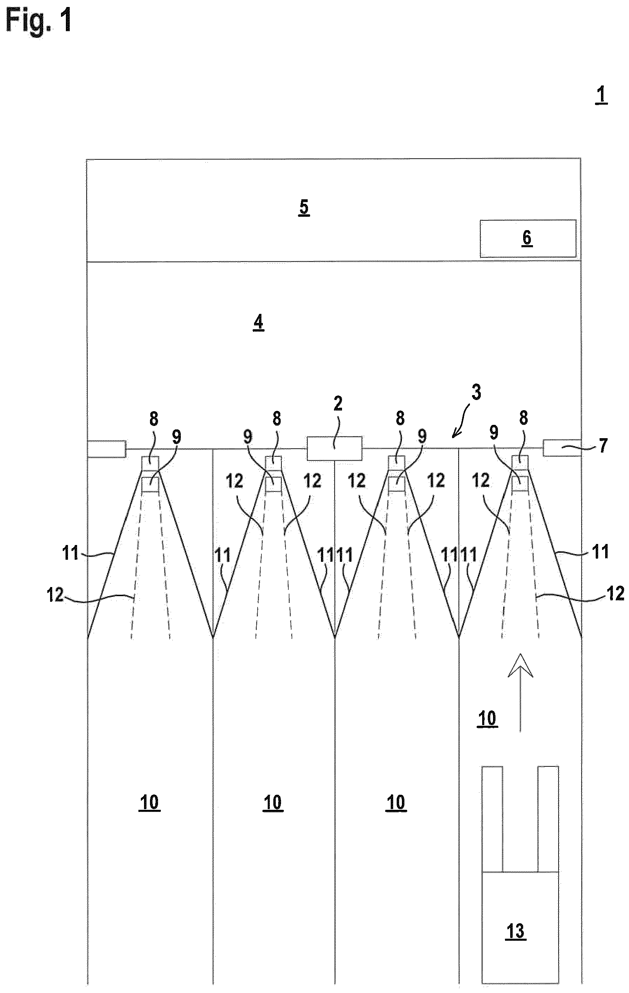

Figur 1 zeigt schematisch ein Ausführungsbeispiel einer Überwachungseinrichtung 1 mit einem Sicherheitssensor 2 zur Absicherung des Zugangs 3 zu einem Gefahrenbereich 4 einer Anlage 5.

Die Anlage 5 wird mit einer Steuerung 6 gesteuert. Der Gefahrenbereich 4 befindet sich im Vorfeld der Anlage 5 und ist seitlich mit einer nicht dargestellten Umzäunung gegen Zutritt gesichert. Der Zugang 3 zum Gefahrenbereich 4 wird von einer Rahmenkonstruktion 7 begrenzt, an welcher der Sicherheitssensor 2 befestigt ist.

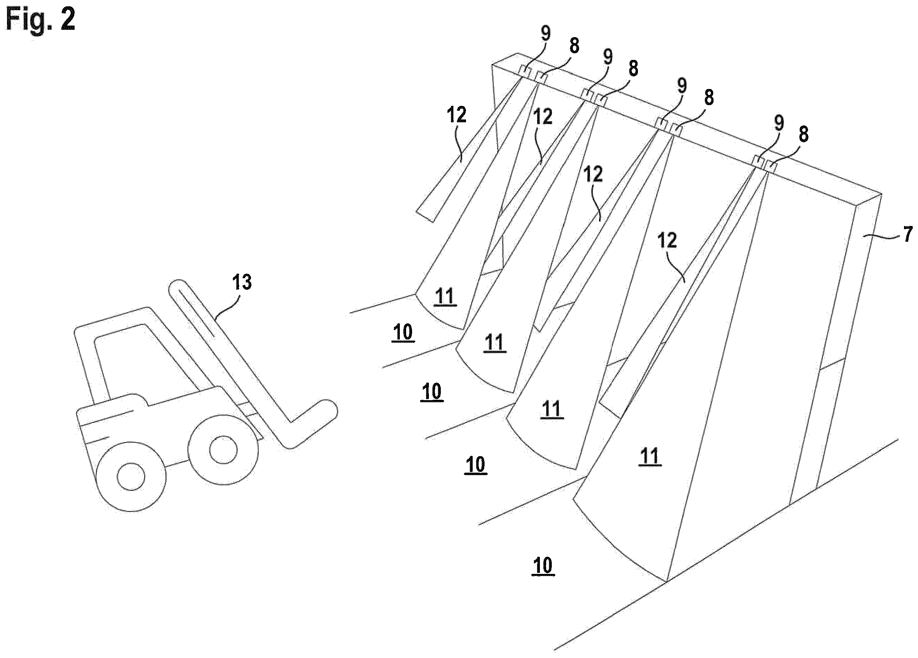

Zudem sind an der Rahmenkonstruktion 7 Sensoren einer Sensoranordnung befestigt. Im vorliegenden Fall besteht die Sensoranordnung aus vier Paaren mit jeweils einem Radarsensor 8 und einem Ultraschallsensor 9. Mit jedem Sensorpaar wird eine Bahn 10 im Vorfeld des Gefahrenbereichs 4 überwacht. Die Figuren 1 und 2 zeigen die vom jeweiligen Radarsensor 8 emittierten Radarwellen 11 und die vom Ultraschallsensor 9 emittierten Ultraschallwellen 12. Mit den Sensoren der Sensoranordnung kann die Größe und Kontur eines zulässigen Objekts bestimmt werden. Längs einer der Bahnen 10 kann sich ein Stapler 13 bewegen um so in den Gefahrenbereich 4 zu gelangen.

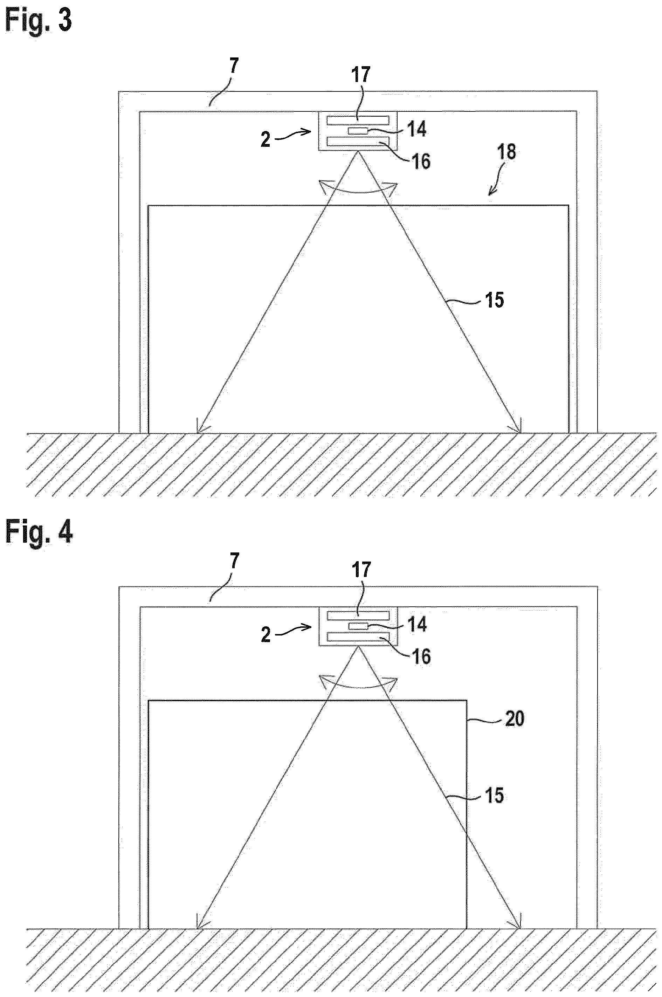

Die Figuren 3 und 4 zeigen den Sicherheitssensor 2 an der Rahmenkonstruktion 7. Der Sicherheitssensor 2 ist im vorliegenden Fall in Form eines Flächendistanzsensors 14 ausgebildet. Der Flächendistanzsensor weist einen Distanzsensor 14 mit einem Lichtstrahlen 15 emittierenden Sender und einem Empfänger, der von einem Objekt zurückreflektierte Lichtstrahlen 15 empfängt, auf. Mit einer Ablenkeinheit 16, die beispielsweise einen motorisch getriebenen Umlenkspiegel aufweist, werden die Lichtstrahlen 15 periodisch innerhalb eines Überwachungsbereichs abgelenkt. Die Auswertung der Sensorsignale des Distanzsensors 14 erfolgt in einer Auswerteeinheit 17, die vorteilhaft redundant, insbesondere zweikanalig aufgebaut ist. Die Distanzmessungen erfolgen vorteilhaft nach einem Impuls-Laufzeit-Verfahren.

In einem Sicherheitsbetrieb überwacht der Sicherheitssensor 2 ein Schutzfeld 18, das sich über die gesamte Breite des Zugangs 3 zum Gefahrenbereich 4 erstreckt, d.h. mit dem Schutzfeld 18 wird der Zugang 3 komplett überwacht (Figur 3). Mit dem Sicherheitssensor 2 wird dann ein binäres Schaltsignal generiert, dessen Schaltzustände angeben, ob sich ein Objekt im Schutzfeld 18 befindet oder nicht. Wird ein Objekt im Schutzfeld 18 detektiert, löst der Sicherheitssensor 2 eine Sicherheitsfunktion aus, die die Anlage 5 in einen sicheren Zustand versetzt. Insbesondere wird die Anlage 5 stillgesetzt.

Der Stapler 13 stellt ein zulässiges Objekt dar, das als nicht gefährdet betrachtet wird, wenn es in den Gefahrenbereich 4 eintritt.

Damit dieses zulässige Objekt den Zugang 3 zum Gefahrenbereich 4 passieren kann, ohne dass der Sicherheitssensor 2 eine Sicherheitsfunktion auslöst, wird dann, wenn mit der Sensoranordnung dieses zulässige Objekt detektiert wird, der Sicherheitssensor 2 vom Sicherheitsbetrieb in einen reduzierten Sicherheitsbetrieb umgeschaltet.

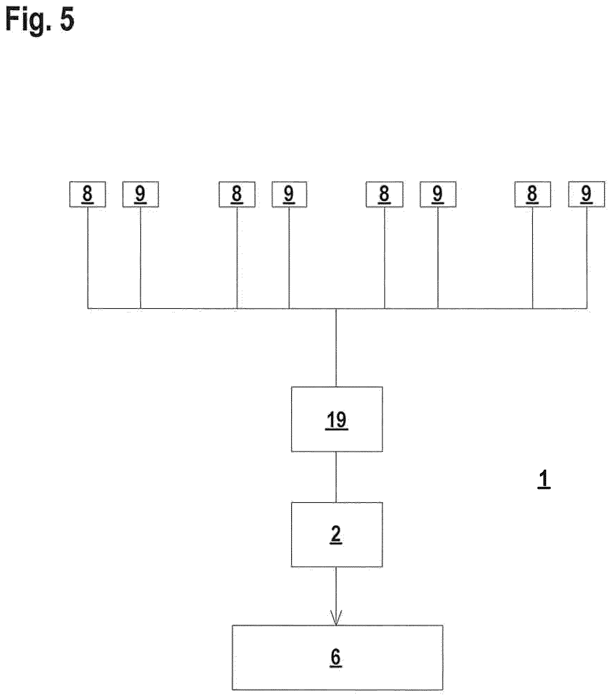

Figur 5 zeigt das entsprechende Blockschaltbild. Die Sensorsignale der Radarsensoren 8 und Ultraschallsensoren 9 werden einer Steuereinheit 19 zugeführt. Wird mit den Radarsensoren 8 und Ultraschallsensoren 9 ein zulässiges Objekt erkannt, generiert die Steuereinheit 19 ein Steuersignal, das dem Sicherheitssensor 2 zugeführt wird, wodurch der Sicherheitssensor 2 vom Sicherheitsbetrieb in den reduzierten Sicherheitsbetrieb umgeschaltet wird. Alternativ können die Sensorsignale der Sensoranordnung auch direkt in der Auswerteeinheit 17 des Sicherheitssensors 2 ausgewertet werden.

Gemäß einer ersten Variante ist im reduzierten Sicherheitsbetrieb das Schutzfeld 18 des Sicherheitssensors 2 überbrückt, so dass ein Objekteingriff im Schutzfeld 18 nicht zur Auslösung der Sicherheitsfunktion führt.

Damit kann das zulässige Objekt den Zugang 3 passieren, ohne dass der Sicherheitssensor 2 die Sicherheitsfunktion auslöst.

Gemäß einer zweiten Variante wird im reduzierten Sicherheitsbetrieb für den Sicherheitssensor 2 anstelle des Schutzfelds 18 ein Sicherheitsschutzfeld 20 aktiviert, welches kleiner als das Schutzfeld 18 ist und einen Zugang 3 zum Gefahrenbereich 4 außerhalb dieses Sicherheitsschutzfelds 20 ermöglicht (Figur 4).

Damit kann ein zulässiges Objekt den Zugang 3 in einem nicht vom Sicherheitsschutzfeld 20 erfassten Bereich passieren.

Figur 4 zeigt den Sicherheitssensor 2 mit dem von ihm überwachten Sicherheitsschutzfeld 20 im reduzierten Sicherheitsbetrieb. Entsprechend der Erfassung des Staplers 13 als zulässiges Objekt auf einer der Bahnen 10 wird das Sicherheitsschutzfeld 20 so dimensioniert, dass die Bahn 10 auf der sich der Stapler 13 bewegt, nicht vom Sicherheitsschutzfeld 20 umfasst ist. Damit kann der Stapler 13 auf dieser Bahn 10 den Zugang 3 vom Gefahrenbereich 4 passieren, ohne dass der Sicherheitssensor 2 die Sicherheitsfunktion auslöst. Alle anderen Bahnen 10 werden vom Sicherheitsschutzfeld 20 umfasst. Dringt ein Objekt in das Sicherheitsschutzfeld 20 ein, löst der Sicherheitssensor 2 die Sicherheitsfunktion aus.

Nachdem das zulässige Objekt den Zugang 3 zum Gefahrenbereich 4 passiert hat, wird der Sicherheitssensor 2 wieder in den Sicherheitsbetrieb umgeschaltet.

Dabei kann ein Umschalten des reduzierten Sicherheitsbetriebs in den Sicherheitsbetrieb des Sicherheitssensors 2 dann erfolgen, wenn mit dem Sicherheitssensor 2 kein Objekt innerhalb des Schutzfelds 18 oder des Sicherheitsschutzfelds 20 detektiert wird.

Weiterhin kann ein Umschalten des reduzierten Sicherheitsbetriebs in den Sicherheitsbetrieb des Sicherheitssensors 2 nach einer vorgegebenen Zeitdauer erfolgen.

### Bezugszeichenliste

- (1): Überwachungseinrichtung
- (2): Sicherheitssensor
- (3): Zugang
- (4): Gefahrenbereich
- (5): Anlage
- (6): Steuerung
- (7): Rahmenkonstruktion
- (8): Radarsensor
- (9): Ultraschallsensor
- (10): Bahn
- (11): Radarwelle
- (12): Ultraschallwelle
- (13): Stapler
- (14): Distanzsensor
- (15): Lichtstrahl
- (16): Ablenkeinheit
- (17): Auswerteeinheit
- (18): Schutzfeld
- (19): Steuereinheit
- (20): Sicherheitsschutzfeld

## Patentansprüche

1. Überwachungseinrichtung (1) zur Absicherung des Zugangs (3) zu einem Gefahrenbereich (4) mit einem Sicherheitssensor (2), der in einem Sicherheitsbetrieb ein Schutzfeld (18) überwacht, wobei der Sicherheitssensor (2) bei einem Objekteingriff in das Schutzfeld (18) eine Sicherheitsfunktion auslöst und mit einer Sensoranordnung, die zur Erfassung eines zulässigen Objekts ausgebildet ist wobei
die Sensoranordnung eine diversitär redundante Anordnung von Sensoren aufweist, und wobei
bei Erfassung eines zulässigen Objektes mittels
der Sensoranordnung der Sicherheitssensor (2) in einen reduzierten Sicherheitsbetrieb versetzt wird, in welchem das zulässige Objekt den Zugang (3) zum Gefahrenbereich (4) passieren kann, ohne dass der Sicherheitssensor (2) die Sicherheitsfunktion auslöst, wobei im reduzierten Sicherheitsbetrieb für den Sicherheitssensor (2) anstelle des Schutzfelds (18) ein Sicherheitsschutzfeld (20) aktiviert wird, welches kleiner als das Schutzfeld (18) ist und einen Zugang (3) zum Gefahrenbereich (4) außerhalb dieses Sicherheitsschutzfelds (20) ermöglicht, und **dadurch gekennzeichnet, dass** die Sensoranordnung Mittel zur Bestimmung von Gewichts- und/oder Masseninformationen und wenigstens einen Radarsensor (8) oder wenigstens einen Ultraschallsensor (9) aufweist, oder dass die Sensoranordnung wenigstens einen kamerabasierten Sensor und wenigstens einen Radarsensor (8) oder wenigstens einen Ultraschallsensor (9) aufweist.

2. Überwachungseinrichtung (1) nach Anspruch 1 **dadurch gekennzeichnet, dass** ein zulässiges Objekt den Zugang (3) in einem nicht vom Sicherheitsschutzfeld (20) erfassten Bereich passiert.

3. Überwachungseinrichtung (1) nach einem der Ansprüche 1 oder 2 **dadurch gekennzeichnet, dass** der Sicherheitssensor (2) eine Auswerteeinheit (17) aufweist, in welcher abhängig von Sensorsignalen ein Schaltsignal generiert wird, wobei bei einem Objekteingriff im Schutzfeld (18) das Schaltsignal einen Schaltzustand einnimmt, der zur Auslösung der Sicherheitsfunktion führt.

4. Überwachungseinrichtung (1) nach einem der Ansprüche 1 bis 3, **dadurch gekennzeichnet, dass** mit dieser der Gefahrenbereich (4) an einer Anlage (5) überwacht wird, und dass mit Auslösen der Sicherheitsfunktion die Anlage (5) stillgesetzt wird.

5. Überwachungseinrichtung (1) nach Anspruch 4 **dadurch gekennzeichnet, dass** mit der Sensoranordnung generierte Sensorsignale in der Auswerteeinheit (17) des Sicherheitssensors (2) ausgewertet werden.

6. Überwachungseinrichtung (1) nach einem der Ansprüche 1 bis 5, **dadurch gekennzeichnet, dass** mit der Sensoranordnung generierte Sensorsignale in einer Steuereinheit (19) ausgewertet werden, wobei die Steuereinheit (19) abhängig von diesen Sensorsignalen ein Steuersignal für den Sicherheitssensor (2) generiert.

7. Überwachungseinrichtung (1) nach Anspruch 6 **dadurch gekennzeichnet, dass** durch das Steuersignal der Sicherheitssensor (2) in den reduzierten Sicherheitsbetrieb umschaltbar ist.

8. Überwachungseinrichtung (1) nach einem der Ansprüche 1 bis 7 **dadurch gekennzeichnet, dass** ein Umschalten des reduzierten Sicherheitsbetriebs in den Sicherheitsbetrieb des Sicherheitssensors (2) dann erfolgt, wenn mit dem Sicherheitssensor (2) kein Objekt innerhalb des Schutzfelds (18) oder des Sicherheitsschutzfelds (20) detektiert wird.

9. Überwachungseinrichtung (1) nach einem der Ansprüche 1 bis 8 **dadurch gekennzeichnet, dass** ein Umschalten des reduzierten Sicherheitsbetriebs in den Sicherheitsbetrieb des Sicherheitssensors (2) nach einer vorgegebenen Zeitdauer erfolgt.

10. Überwachungseinrichtung (1) nach einem der Ansprüche 1 bis 9 **dadurch gekennzeichnet, dass** die Sensoranordnung wenigstens einen Radarsensor (8) und wenigstens einen Ultraschallsensor (9) aufweist, oder dass die Sensoranordnung wenigstens einen Passivinfrarot-Bewegungsmelder und wenigstens einen Radarsensor (8) oder wenigstens einen Ultraschallsensor (9) aufweist, oder dass die Sensoranordnung wenigstens einen Induktionsschleifensensor und wenigstens einen Radarsensor (8) oder wenigstens einen Ultraschallsensor (9) aufweist.

11. Überwachungseinrichtung (1) nach einem der Ansprüche 1 bis 10 **dadurch gekennzeichnet, dass** mit der Sensoranordnung die Größe und/oder Kontur und/oder Geschwindigkeit und/oder spezifische Objekteigenschaften eines zulässigen Objekts erfasst werden.

12. Überwachungseinrichtung (1) nach Anspruch 11 **dadurch gekennzeichnet, dass** als spezifische Objekteigenschaft Material oder Gewicht eines zulässigen Objekts erfasst wird.

13. Überwachungseinrichtung (1) nach einem der Ansprüche 1 bis 12 **dadurch gekennzeichnet, dass** das zulässige Objekt ein Stapler (13) ist.

14. Überwachungseinrichtung (1) nach einem der Ansprüche 1 bis 13 **dadurch gekennzeichnet, dass** der Sicherheitssensor (2) ein optischer Sensor in Form eines Lichtvorhangs, eines Flächendistanzsensors oder eines Kamerasensors ist.

## Claims

1. A monitoring device (1) for safeguarding access (3) to a danger zone (4) with a safety sensor (2) which monitors a protective field (18) in a safety mode, wherein the safety sensor (2) triggers a safety function when an object enters the protective field (18) and with a sensor arrangement which is designed to detect a permissible object,
wherein the sensor arrangement comprises a diversely redundant arrangement of sensors, and
wherein when a permissible object is detected by means of the sensor arrangement, the safety sensor (2) is set to a reduced safety mode in which the permissible object can pass through the access (3) to the danger zone (4) without the safety sensor (2) triggering the safety function,
wherein in reduced safety mode for the safety sensor (2), instead of the protective field (18), a safety protective field (20) is activated which is smaller than the protective field (18) and enables access (3) to the danger zone (4) outside this safety protective field (20), and
**characterised in that** the sensor arrangement has means for determining weight and/or mass information and at least one radar sensor (8) or at least one ultrasonic sensor (9), or **in that** the sensor arrangement has at least one camera-based sensor and at least one radar sensor (8) or at least one ultrasonic sensor (9).

2. A monitoring device (1) according to claim 1, **characterised in that** an admissible object passes the access (3) in an area not covered by the safety protective field (20).

3. A monitoring device (1) according to one of claims 1 or 2, **characterised in that** the safety sensor (2) has an evaluation unit (17) in which a switching signal is generated as a function of sensor signals, the switching signal assuming a switching state which leads to the triggering of the safety function when an object engages in the protective field (18).

4. A monitoring device (1) according to one of claims 1 to 3, **characterised in that** it is used to monitor the danger zone (4) on a system (5), and **in that** the system (5) is shut down when the safety function is triggered.

5. A monitoring device (1) according to claim 4, **characterised in that** sensor signals generated with the sensor arrangement are evaluated in the evaluation unit (17) of the safety sensor (2).

6. A monitoring device (1) according to one of claims 1 to 5, **characterised in that** sensor signals generated with the sensor arrangement are evaluated in a control unit (19), the control unit (19) generating a control signal for the safety sensor (2) as a function of these sensor signals.

7. A monitoring device (1) according to claim 6, **characterised in that** the safety sensor (2) can be switched to reduced safety mode by the control signal.

8. A monitoring device (1) according to one of claims 1 to 7, **characterised in that** the reduced safety mode is switched to the safety mode of the safety sensor (2) when no object is detected within the protective field (18) or the safety protective field (20) by the safety sensor (2).

9. A monitoring device (1) according to one of claims 1 to 8, **characterised in that** the reduced safety mode is switched to the safety mode of the safety sensor (2) after a predetermined period of time.

10. A monitoring device (1) according to one of claims 1 to 9, **characterised in that** the sensor arrangement has at least one radar sensor (8) and at least one ultrasonic sensor (9), or **in that** the sensor arrangement has at least one passive infrared motion detector and at least one radar sensor (8) or at least one ultrasonic sensor (9), or **in that** the sensor arrangement has at least one induction loop sensor and at least one radar sensor (8) or at least one ultrasonic sensor (9).

11. A monitoring device (1) according to one of claims 1 to 10, **characterised in that** the sensor arrangement is used to detect the size and/or contour and/or speed and/or specific object properties of an admissible object.

12. A monitoring device (1) according to claim 11, **characterised in that** the material or weight of an admissible object is detected as a specific object property.

13. A monitoring device (1) according to one of claims 1 to 12, **characterised in that** the permissible object is a forklift truck (13).

14. A monitoring device (1) according to one of claims 1 to 13, **characterised in that** the safety sensor (2) is an optical sensor in the form of a light curtain, an area distance sensor or a camera sensor.

## Revendications

1. Dispositif de surveillance (1) pour sécuriser l'accès (3) à une zone dangereuse (4) avec un capteur de sécurité (2) qui surveille un champ de protection (18) en mode de sécurité, dans lequel le capteur de sécurité (2) déclenche une fonction de sécurité lorsqu'un objet pénètre dans le champ de protection (18) et avec une disposition de capteurs conçue pour détecter un objet autorisé,
dans lequel l'ensemble de capteurs comprend un ensemble de capteurs diversement redondants, et
dans lequel, lorsqu'un objet autorisé est détecté au moyen du dispositif de détection, le capteur de sécurité (2) est réglé sur un mode de sécurité réduit dans lequel l'objet autorisé peut passer par l'accès (3) à la zone dangereuse (4) sans que le capteur de sécurité (2) ne déclenche la fonction de sécurité,
dans lequel, en mode de sécurité réduite pour le capteur de sécurité (2), au lieu du champ de protection (18), un champ de protection de sécurité (20) est activé, qui est plus petit que le champ de protection (18) et permet l'accès (3) à la zone dangereuse (4) en dehors de ce champ de protection de sécurité (20), et
**caractérisé par le fait que** le dispositif de capteurs comporte un moyen de déterminer les informations relatives au poids et/ou à la masse et au moins un capteur radar (8) ou au moins un capteur à ultrasons (9), ou **par le fait que** le dispositif de capteurs comporte au moins un capteur à base de caméra et au moins un capteur radar (8) ou au moins un capteur à ultrasons (9).

2. Dispositif de surveillance (1) selon la revendication 1, **caractérisé par le fait qu'**un objet admissible passe l'accès (3) dans une zone non couverte par le champ de protection de sécurité (20).

3. Dispositif de surveillance (1) selon l'une des revendications 1 ou 2, **caractérisé par le fait que** le capteur de sécurité (2) possède une unité d'évaluation (17) dans laquelle un signal de commutation est généré en fonction des signaux du capteur, le signal de commutation prenant un état de commutation qui entraîne le déclenchement de la fonction de sécurité lorsqu'un objet s'engage dans le champ de protection (18).

4. Dispositif de surveillance (1) selon l'une des revendications 1 à 3, **caractérisé par le fait qu'**il est utilisé pour surveiller la zone de danger (4) sur un système (5), et **par le fait que** le système (5) est arrêté lorsque la fonction de sécurité est déclenchée.

5. Dispositif de surveillance (1) selon la revendication 4, **caractérisé par le fait que** les signaux des capteurs générés par l'agencement des capteurs sont évalués dans l'unité d'évaluation (17) du capteur de sécurité (2).

6. Dispositif de surveillance (1) selon l'une des revendications 1 à 5, **caractérisé par le fait que** les signaux des capteurs générés par l'agencement des capteurs sont évalués dans une unité de commande (19), l'unité de commande (19) générant un signal de commande pour le capteur de sécurité (2) en fonction de ces signaux de capteurs.

7. Dispositif de surveillance (1) selon la revendication 6, **caractérisé par le fait que** le capteur de sécurité (2) peut être mis en mode de sécurité réduite par le signal de commande.

8. Dispositif de surveillance (1) selon l'une des revendications 1 à 7, **caractérisé par le fait que** le mode de sécurité réduit est commuté sur le mode de sécurité du capteur de sécurité (2) lorsqu'aucun objet n'est détecté dans le champ de protection (18) ou le champ de protection de sécurité (20) par le capteur de sécurité (2).

9. Dispositif de surveillance (1) selon l'une des revendications 1 à 8, **caractérisé par le fait que** le mode de sécurité réduit passe au mode de sécurité du capteur de sécurité (2) après une période de temps prédéterminée.

10. Dispositif de surveillance (1) selon l'une des revendications 1 à 9, **caractérisé par le fait que** le dispositif de capteurs comporte au moins un capteur radar (8) et au moins un capteur ultrasonique (9), ou **par le fait que** le dispositif de capteurs comporte au moins un détecteur de mouvement à infrarouge passif et au moins un capteur radar (8) ou au moins un capteur ultrasonique (9), ou **par le fait que** le dispositif de capteurs comporte au moins un capteur à boucle d'induction et au moins un capteur radar (8) ou au moins un capteur ultrasonique (9).

11. Dispositif de surveillance (1) selon l'une des revendications 1 à 10, **caractérisé par le fait que** le capteur est utilisé pour détecter la taille et/ou le contour et/ou la vitesse et/ou les propriétés spécifiques d'un objet admissible.

12. Dispositif de surveillance (1) selon la revendication 11, **caractérisé par le fait que** le matériau ou le poids d'un objet admissible est détecté comme une propriété spécifique de l'objet.

13. Dispositif de surveillance (1) selon l'une des revendications 1 à 12, **caractérisé par le fait que** l'objet autorisé est un chariot élévateur à fourche (13).

14. Dispositif de surveillance (1) selon l'une des revendications 1 à 13, **caractérisé par le fait que** le capteur de sécurité (2) est un capteur optique sous la forme d'un rideau lumineux, d'un capteur de distance de zone ou d'un capteur de caméra.
